# EUROPÄISCHE PATENTANMELDUNG

(11) **EP 1 783 436 A2**
(43) Veröffentlichungstag der Anmeldung: **09.05.2007**
(21) Anmeldenummer: 06020385.8
(22) Anmeldetag: 28.09.2006
(51) Int. Cl.: F24D 3/14

(54) **Befestigungsklammer für Rohre von Fussbodenheizungssystemen**

(30) Priorität: 06.10.2005 IT BZ20050052
(71) Anmelder: EUROTHERM S.P.A., 39010 Appiano (Bolzano) (IT)
(72) Erfinder: Pezzei, Cleto, 39057 Appiano(BZ) (IT)
(74) Vertreter: Oberosler, Ludwig

(57) **Zusammenfassung**

Befestigungsklammer für Bodenheizungssysteme welche schellenförmig ausgebildet ist um eine lösbare Verbindung zwischen dem Rohr (5) und einem gitterförmigen oder langgezogenen, einen unterschiedlichen Querschnitt aufweisenden, Träger (3) herzustellen, wobei die Befestigungsklammer (4) aus einem ersten C-förmigen Teil (4a) welcher ca. ¾ eines Kreisumfanges einnimmt und mit einer Außenverzahnung (4b) versehen ist, aus einem zweiten C-förmigen Teil (4g) welcher ca. die Hälfte eines Kreisumfanges einnimmt und mit einer Innenverzahnung (4h) ausgestattet ist und aus einem bogenförmigen, biegsamen Verbindungsabschnitt (4d) besteht und wobei, nachdem der bogenförmige Abschnitt (4d) mit der konkaven Seite an den Draht (3) oder an den Träger angelegt worden ist und das Rohr (5) in den ersten C-förmigen Teil (4a) eingesetzt worden ist, das Rohr (5) an den Draht (3) oder an den Träger gebunden wird, ohne dass ein direkter Kontakt zwischen Rohr (5) und Träger entsteht, indem der zweite C-förmige Teil (4g) an dem ersten C-förmigen Teil (4a), durch gegenseitiges Eingreifen der entsprechenden Verzahnungen (4b, 4h), angebracht wird.

## Beschreibung

Die Erfindung bezieht sich auf eine Befestigungsklammer welche, beispielsweise im Spritzgussverfahren, aus elastischem Kunststoff hergestellt ist, wesentlich schellenförmig ist und an den Drähten der elektrisch verschweißten Armierungsgitter, welche im Unterbeton eines Fußbodenheizungssystemes eingearbeitet sind, anbringbar sind um die Rohre welche vom warmen Wasser durchströmt werden an besagte Armierungsgitter zu binden.

Es sind Befestigungsklammern aus Kunststoff für die Befestigung der Heizungsrohre an den Isolationspanneelen welche auf dem Unterboden verlegt werden bekannt, diese Klammern haben wesentlich die Form eines Bügels mit zwei zueinander parallelen Abschnitten welche spitze Endbereiche mit Widerhaken aufweisen welche geeignet sind das Eindringen in die lsolationspaneele zu erleichtern und das Herausziehen zu verhindern. Andere Klammern für die Befestigung an Isolationspaneelen sind wesentlich Y-förmig wobei der obere Bereich für die Aufnahme und die Befestigung des Rohres und der vertikale "Fußteil" für das Eindringen und die Verankerung am Paneel ausgebildet sind. Für die Befestigung der Rohre am Armierungsgitter sind Klammern aus elastischem Kunststoff bekannt welche an einer Seite eine gabelförmige oder U-förmige Aufnahme aufweisen während sie an der Gegenseite mit einer Aufnahme ausgestattet sind welche die Anbringung am Armierungsgitter durch Schnappverschluss ermöglichen. Für die Befestigung am metallischen Armierungsgitter sind auch biegsame Klammern bekannt welche eine langgezogene Form mit zwei Einhängenden aufweisen; diese Klammerart ist geeignet um das Rohr unterhalb oder oberhalb des Gitters zu befestigen, das Rohr steht dabei mit dem metallischen Gitter in Berührung.

Sämtliche genannten bekannten Klammern haben den Nachteil, dass die Befestigung des Rohres nicht mit ausreichender Sicherheit erfolgt weswegen, bereits während dem Verlegen der einzelnen Komponenten und anschließend während des Gusses des Unterbodens, wegen der Belastungen welche auf das Gitter und/oder auf die Rohre und/oder auf die Klammern selbst wirken, das Loslösen des Rohres und/oder der Klammern von den jeweiligen Trägern erfolgen kann.

Die Erfindung stellt sich die Aufgabe eine Befestigungsklammer für Rohre der obgenannten Art zu schaffen welche einfach anbringbar ist, für Rohre unterschiedlichen Durchmessers anwendbar ist, an Armierungsgittern mit unterschiedlichen Drahtdurchmessern anbringbar ist, bzw. an Trägern anbringbar ist welche langgestreckte Form und unterschiedlichen Querschnitt aufweisen und zwar oberhalb oder unterhalb der Ebene welche das Gitter oder die Träger enthält wobei eine dauerhafte und sichere Befestigung während der gesamten Montagearbeit und dem Guss des Unterbodens, bei Vermeidung eines direkten Kontaktes zwischen Rohr und Träger, erfolgt.

Zur Lösung dieser Aufgabe schlägt die Erfindung den Einsatz einer Klammer vor welche die Form einer Schelle aufweist, wobei ein erster Teil C-förmig ist und sich über mehr als die Hälfte eines Kreisumfanges, vorzugsweise über ca. ¾ eines Kreisumfanges, erstreckt während ein zweiter C-förmiger Teil sich über ca. die Hälfte eines Kreisumfanges erstreckt und über einen bogenförmigen Verbindungsabschnitt mit dem ersten C-förmigen Teil verbunden ist. Der erste C-förmige Teil weist einen inneren Durchmesser auf welcher ungefähr dem Außendurchmesser des dünnsten zu befestigenden Rohres entspricht und außen am längeren Abschnitt, ausgehend vom freien Ende dieses Teiles, eine Verzahnung, mit Zähnen welche vom Abschnittende weg angewinkelt sind, aufweist. Der zweite C-förmige Teil weist einen inneren Durchmesser auf welcher ungefähr dem Außendurchmesser des ersten C-förmigen Teiles entspricht und eine innere Verzahnung aufweist deren Zähne vom Endbereich des Teiles gegen den bogenförmigen Verbindungsabschnitt hin angewinkelt sind. Der biegsame bogenförmige Verbindungsabschnitt zwischen dem ersten und dem zweiter C-förmigen Teil hat eine derartige Form und Anordnung, dass infolge Anbringung an einem der Drähte des Armierungsgitters oder an einem langgezogenen Träger mit beliebigem Querschnitt und infolge Einführung eines Rohres in den ersten C-förmigen Teil, ermöglicht wird, dass der zweite C-förmige Teil außen am ersten C-förmigen Teil und diesen teilweise überdeckend, durch Eingriff der Innenverzahnung des zweiten C-förmigen Teiles in die entsprechende Außenverzahnung des ersten C-förmigen Teiles, eingreift. Infolge der Durchführung der obgenannten Verbindung ist das Rohr vollständig von dem ersten und vom zweiten C-förmigen Teil der Befestigungsklammer, unter Vermeidung eines direkten Kontaktes zwischen Rohr und Träger, umschlossen. Die Erfindung schließt nicht aus dass, als Ersatz der obgenannten Verzahnungen, bekannte mehrfache Einrastelemente von der Art Vorsprünge/Ausnehmungen oder Vorsprünge/ Durchbrüche, vorgesehen sind. Der bogenförmige Verbindungsabschnitt zwischen den beiden C-förmigen Teilen dient als Halterung für einen der Drähte des Armierungsgitters. In der Praxis kann der Draht des Armierungsgitters mit seiner Achse wesentlich parallel zum, durch die Klammer fixierten, Rohr verlaufen; der Draht kann jedoch auch mit seiner Achse quer zum Rohr verlaufen wobei der Draht durch die eigens vorgesehenen Kerben, welche seitlich am gebogenen Verbindungsabschnitt vorgesehen sind, verläuft.

Die Praxis hat gezeigt, dass das gegenseitige Eingreifen der Verzahnungen an den beiden C-förmigen Teilen der Klammer erfindungsgemäß eine dauerhafte und sichere Halterung des Rohres sichert, der Einhängeffekt zwischen den beiden C-förmigen Teilen kann gesteigert werden indem der zweite (abdeckende) C-förmigen Teil den Verlauf eines Spiralabschnittes aufweist wobei der Radius der Krümmung zum Ende des zweiten C-förmigen Teiles hin abnimmt.

Erfindungsgemäß kann der bogenförmige Vebindungsabschnitt zwischen den beiden C-förmigen Teilen auch mit traditionellen Verankerungs- oder Befestigungselementen ausgestattet sein um eine sichere und dauerhafte Verbindung zwischen dem Rohr und dem Träger, welcher auch anders als das Armierungsgitter gestaltet sein kann, zu schaffen. Erfindungsgemäß kann der bogenförmige Verbindungsabschnitt auch die Form einer elastisch ausziehbaren Serpentine haben.

Das freie Ende des zweiten C-förmigen Teiles der Klammer kann erfindungsgemäß mit einer Zunge oder einer Grifflasche versehen sein um die eventuelle absichtliche Öffnung der Klammer zu erleichtern. Es wird weiters nicht ausgeschlossen, dass die Schließstellung der Klammer durch eine selbstklebende oder einschnappbare Zunge an der Rückseite des ersten C-förmigen Teiles zusätzlich gesichert wird.

Die Erfindung wird anschließend, anhand eines in den beigelegten Zeichnungen schematisch dargestellten erfindungsgemäßen Ausführungsbeispieles einer Befestigungsklammer für Rohre von Fußbodenheizungssystemen, näher erklärt; dabei erfüllen die Zeichnungen rein erklärenden, nicht begrenzenden Zweck.

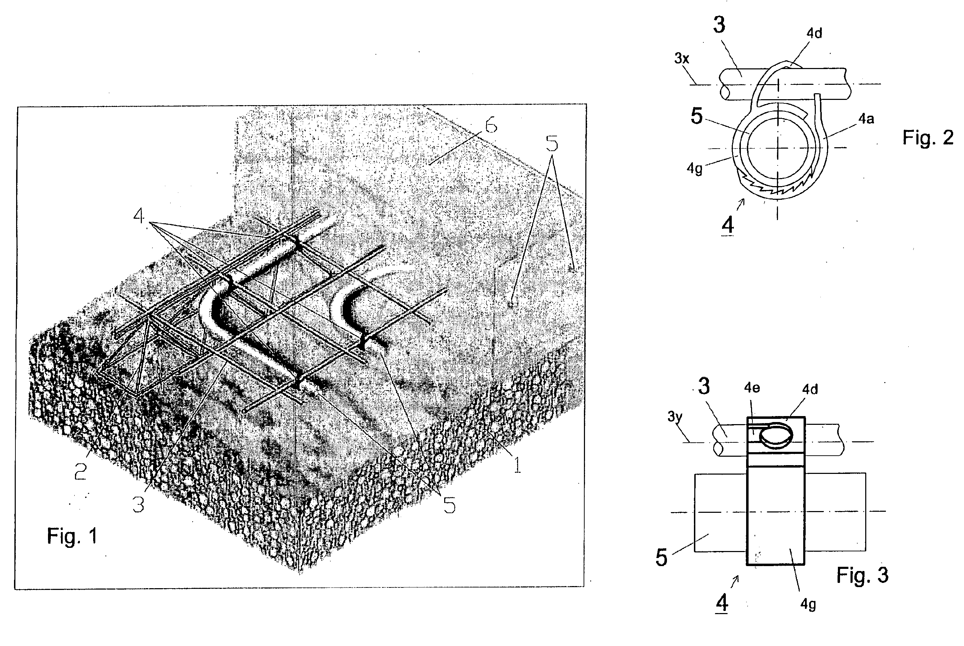

Die Fig. 1 zeigt in perspektivischer Darstellung, teilweise im Schnitt, die Befestigung der Rohre mittels mehrerer erfindungsgemäßer Befestigungsklammern unterhalb an einem Armierungsgitter welches, in Bezug auf den Unterboden, durch Metallgittermaste beabstandet ist.

Die Fig. 2 zeigt eine erfindungsgemäße Befestigungsklammer für Rohre in Befestigungsposition mit der Achse des Drahtes des Armierungsgitters quer zur Achse des Rohres.

Die Fig. 3 zeigt eine erfindungsgemäße Befestigungsklammer in Befestigungsposition mit der Achse des Drahtes des Armierungsgitters parallel zur Achse des Rohres.

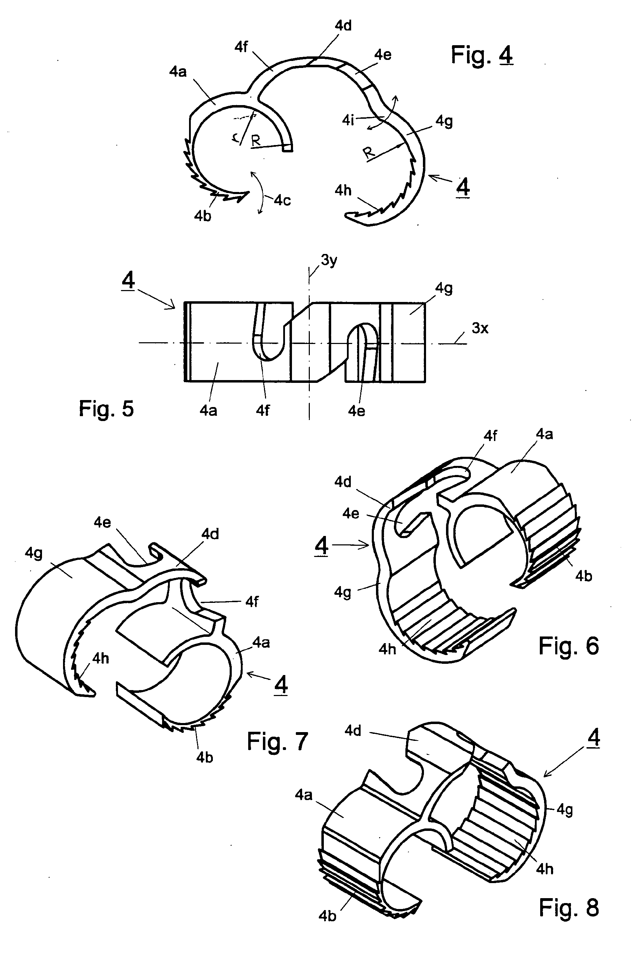

Die Fig. 4 zeigt die Vorderansicht einer erfindungsgemäßen Befestigungsklammer in geöffneter Stellung.

Die Fig. 5 zeigt die Draufsicht auf die in Fig. 4 dargestellte Befestigungsklammer.

Die Fig. 6, 7, 8 zeigen in perspektivischer Darstellung die selbe, in den Fig. 4 und 5 gezeigte, Befestigungsklammer.

Bei Errichtung eines industriellen Fußbodenheizungssystemes werden auf dem Unterboden 1, unter eventueller Zwischenlage einer Dämmschicht, die metallischen Gittermaste 2 verlegt auf welchen das Armierungsgitter 3 aufliegt. Unterhalb des besagten Gitters 3 verlaufen die Rohre 5 für den Durchfluss des Heizungswassers, diese Rohre 5 sind mittels Befestigungsklammern 4 an den Drähten des Gitters 3 so befestigt, dass die Position des Rohres gemäß dem, laut spezifischer Berechnungen erstellten, Verlegungsplan gesichert wird.

Die Befestigungsklammer 4 hat wesentlich die Form einer Schelle bestehend aus einem ersten C-förmigen Teil 4g welcher sich ca. über einen Halbkreis erstreckt und einem bogenförmigen Verbindungsabschnitt 4d. Der erste C-förmige Teil 4a weist einen inneren Rundungsradius r auf welcher ca. dem halben Außendurchmesser des dünnsten Rohres entspricht, während der zweite C-förmige Teil 4g einen inneren Rundungsradius R aufweist welcher ca. dem äußeren Rundungsradius R des ersten C-förmigen Teiles 4a entspricht. Der erste C-förmige Teil 4a weist eine Außenverzahnung 4b auf welche sich vom freien Ende dieses Teiles in Richtung des Bereiches des bogenförmigen Verbindungsabschnittes 4d erstreckt; die Zähne haben di Form von Sägezähnen welche in Richtung des besagten Verbindungsabschnittes angewinkelt sind. Der zweite C-förmige Teil 4g ist mit einer Innenverzahnung 4h ausgestattet welche sich vom freien Ende dieses Teiles bis zum Verbindungsabschnitt 4d erstreckt; auch diese Zähne sind in Richtung Verbindungsabschnitt 4d angewinkelt und entsprechen den Zähnen der Verzahnung 4d.

Der bogenförmige Verbindungsabschnitt 4d ist mit seitlichen Kerben 4e, 4f ausgestattet von denen jede nach der jeweils genüberliegenden Seite hin offen ist. Zwecks Befestigung des Rohres 5 an einem der Drähte 3 des Armierungsgitters wird die Befestigungsklammer 4 mit dem bogenförmigen Verbindungsabschnitt 4d mit der durchgebogenen Seite zwischen den C-förmigen Teilen 4a, 4g am Draht 3 angelegt, anschließend wird das Rohr 5 innen in den C-förmigen Teil 4a eingeführt wobei das entsprechende Ende nach außen gebogen 4c wird, darauf wird durch Biegen 4i des gebogenen Verbindungsabschnittes 4d, der zweite C-förmige Teil 4g außen am ersten C-förmigen Teil 4a eingehängt indem die entsprechenden Verzahnungen 4b, 4h in Eingriff gebracht werden.

Nachdem seitens der beiden Verzahnungen 4b, 4h die Eingriffposition eingenommen worden ist, ist das Rohr 5 von den Teilen 4a, 4g vollständig umschlossen während der Draht 3 vom bogeförmigen Verbindungsabschnitt 4d gehalten wird wobei der direkte Kontakt zwischen Rohr 5 und Draht 3 vermieden wird. Die Praxis hat gezeigt, dass die derartig erreichte Befestigung beachtenswerten Belastungen welche auf die Rohre 5 und/oder auf die Befestigungsklammern 4 während des Verlegens dieser Elemente als auch anschließend während des Gusses der Unterbodenplatte 6 wirken, standhalten.

Die seitlichen Kerben 4e, 4f ermöglichen eventuell, zusammen mit einer gewissen Elastizität des bogenförmigen Verbindungsabschnittes 4d, welcher gegebenenfalls die Form einer elastisch ausziehbaren Serpentine hat, die parallele, angewinkelte oder querliegende Ausrichtung der Klammer in Bezug auf den entsprechenden Draht 3 des Armierungsgitters; das selbe Ergebnis kann erreicht werden indem der gebogene Verbindungsabschnitt im Bereich des am Draht 3 anliegenden Teiles einen kleinen Querschnitt und einen S- oder Z-förmigen Verlauf aufweist. Die Erfindung schließt nicht aus dass der besagte gebogene Verbindungsabschnitt 4d mit bekannten Befestigungs- oder Verankerungsorganen versehen ist welche nach außen abstehen. Das freie Ende des zweiten C-förmigen Teiles 4g kann erfindungsgemäß mit einer Zunge oder einem Griffelement versehen sein, dabei kann das Griffelement selbst so ausgeformt sein, dass die Verschlussposition der Klammer 4 zusätzlich gesichert wird.

## Patentansprüche

1. Befestigungsklammer für Bodenheizungssysteme welche schellenförmig ausgebildet ist um eine lösbare Verbindung zwischen dem Rohr (5) und einem gitterförmigen oder langgezogenen, einen unterschiedlichen Querschnitt aufweisenden, Träger (3) herzustellen, **dadurch gekennzeichnet, dass** die Befestigungsklammer (4) aus einem ersten C-förmigen Teil (4a) welcher ca. ¾ eines Kreisumfanges einnimmt und mit einer Außenverzahnung (4b) versehen ist, aus einem zweiten C-förmigen Teil (4g) welcher ca. die Hälfte eines Kreisumfanges einnimmt und mit einer Innenverzahnung (4h) ausgestattet ist und aus einem bogenförmigen, biegsamen Verbindungsabschnitt (4d) besteht und dass, nachdem der bogenförmige Abschnitt (4d) mit der konkaven Seite an den Draht (3) oder an den Träger angelegt worden ist und das Rohr (5) in den ersten C-förmigen Teil (4a) eingesetzt worden ist, das Rohr (5) an den Draht (3) oder an den Träger gebunden wird, ohne dass ein direkter Kontakt zwischen Rohr (5) und Träger entsteht, indem der zweite C-förmige Teil (4g) an dem ersten C-förmigen Teil (4a), durch gegenseitiges Eingreifen der entsprechenden Verzahnungen (4b, 4h), angebracht wird.

2. Befestigungsklammer gemäß Anspruch 1, **dadurch gekennzeichnet, dass** der bogenförmige Verbindungsabschnitt (4d) mit seitlichen Kerben (4e, 4f) welche an der je entgegengesetzten Seite offen sind, versehen ist.

3. Befestigungsklammer gemäß Anspruch 1, **dadurch gekennzeichnet, dass** der bogenförmige Verbindungsabschnitt (4d), im Bereich welcher am Draht (3) aufliegt, im Verhältnis zum Querschnitt der C-förmigen Teile (4a, 4g), schmäleren Querschnitt aufweist und/oder S- oder Z-förmig ausgebildet ist.

4. Befestigungsklammer gemäß Anspruch 1, **dadurch gekennzeichnet, dass** der bogenförmige Verbindungsabschnitt (4d) mit bekannten, nach außen abstehenden, Befestigungs- oder Verankerungsorganen versehen ist.

5. Befestigungsklammer gemäß Anspruch 1, **dadurch gekennzeichnet, dass** das freie Ende des zweiten C-förmigen Teiles mit einer Zunge oder mit einem Griff, um das absichtliche Lösen der Verschlussstellung zu erleichtern, versehen ist.

6. Befestigungsklammer gemäß Anspruch 1, **dadurch gekennzeichnet, dass** das freie Ende des zweiten C-förmigen Teiles (4g) mit einer selbstklebenden oder an der Rückseite des zweiten C-förmigen Teiles (4a) einschnappenen Zunge versehen ist.

7. Befestigungsklammer gemäß Anspruch 1, **dadurch gekennzeichnet, dass** die Verzahnungen (4b, 4h) durch mehrfach, gegenseitig einrastende Elemente, bestehend aus Vorsprüngen/Ausnehmungen oder Vorsprüngen/Durchbrüchen, ersetzt sind.

8. Befestigungsklammer gemäß Anspruch 1, **dadurch gekennzeichnet, dass** der bogenförmige Verbindungsabschnitt (4d) die Form einer ausziehbaren Serpentine aufweist.
